(19) Europäisches Patentamt European Patent Office Office européen des brevets

(11) **EP 2 705 973 B1**

(12) **EUROPEAN PATENT SPECIFICATION**

(45) Date of publication and mention of the grant of the patent:
**04.07.2018 Bulletin 2018/27**

(51) Int Cl.:
**B60L 11/00** (2006.01)    **B60L 15/20** (2006.01)
**B62M 6/45** (2010.01)    **B62M 6/50** (2010.01)
**B62M 6/55** (2010.01)

(21) Application number: **13181387.5**

(22) Date of filing: **22.08.2013**

(54) **Straddle-type electric vehicle, power unit, and method for controlling power unit**

Elektrofahrzeug mit Spreizsitz, Stromversorgung und Verfahren zu deren Steuerung

Véhicule électrique de type à enfourcher, unité de puissance et son procédé de commande

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2012 JP 2012184613**

(43) Date of publication of application:
**12.03.2014 Bulletin 2014/11**

(73) Proprietor: **Yamaha Hatsudoki Kabushiki Kaisha Iwata-shi, Shizuoka 438-8501 (JP)**

(72) Inventors:
• **Arimune, Nobuyasu**
  **Iwata-shi, Shizuoka 438-8501 (JP)**
• **Kishita, Hirokatsu**
  **Iwata-shi, Shizuoka 438-8501 (JP)**
• **Kinpara, Yuki**
  **Iwata-shi, Shizuoka 438-8501 (JP)**

(74) Representative: **Grünecker Patent- und Rechtsanwälte**
  **PartG mbB**
  **Leopoldstraße 4**
  **80802 München (DE)**

(56) References cited:
**EP-A2- 0 847 915      EP-A2- 0 994 015**
**DE-A1- 19 955 863    DE-T2- 69 503 445**
**DE-T2- 69 620 078    DE-T2- 69 703 762**
**JP-A- H1 159 557      JP-A- H09 263 290**
**JP-A- H11 334 677    US-A1- 2010 131 164**

• **Jan Braun: "V CC Formelsammlung Formelsammlung Formelsammlung Formelsammlung Formelsammlung Formelsammlung Formelsammlung Formelsammlung Formelsammlung Formelsammlung Formelsammlung Formelsammlung Formelsammlung Formelsammlung", , 5 July 2012 (2012-07-05), XP055306972, Retrieved from the Internet: URL:http://www.maxonmotor.de/medias/sys_ma ster/root/8819062800414/maxon-Formelsammlu ng-d.pdf?attachment=true [retrieved on 2016-09-30]**

EP 2 705 973 B1

# Description

## TECHNICAL FIELD

The present invention relates to an electric vehicle.

## BACKGROUND

An electric vehicle (for example an electric power-assisted bicycle) in which driving force of an electric motor is transmitted to a wheel via a transmission is known(refer to Japanese Patent Publication JP-A-11-59557). The electric power-assisted bicycle controls current applied to the electric motor in response to pedal stepping force that is input into a pedal pressed down by a rider.

However, in the electric vehicle such as a electric power-assisted bicycle in which output of the electric motor is input into the wheel via the transmission, the controlling method described above causes the following disadvantage.

When electric current of a constant value is input into the electric motor in a state that a transmission gear with a small transmission gear ratio is selected in the transmission, large torque acts on the wheel. On the other hand, in a state that a transmission gear with a large transmission gear ratio is selected in the transmission, a small torque acts on the wheel even if an electric current of the same value is input into the electric motor.

That is, the behavior of the vehicle is varied in response to the gear ratio selected in the transmission, even if the pedal is stepped at the same stepping force and the electric current of the same magnitude is applied to the electric motor. For example, when the transmission gear with the small transmission gear ratio is selected, a rider feels that a vehicle body is in abrupt acceleration. In the case where the transmission gear with the large transmission gear ratio is selected, the torque that acts on the wheel is likely too weak. In this manner, there is a disadvantage that constant riding comfort is not obtained even if stepping the pedal with the stepping force of the same magnitude.

Furthermore, documents:

US 2010/131164 A1 relates to a method for controlling the electric motor of an electric power-assisted vehicle with a transmission between the motor and the wheel JPH11334677A relates to a method for controlling the electric motor of an electric power-assisted vehicle with a fixed transmission between the motor and the wheel.

## SUMMARY

Illustrative aspects of the invention provide an electric vehicle with riding stability, a power unit using the same, and a method for controlling an electric vehicle motor.

According to one illustrative aspect of the invention, there is provided a method for controlling an electric vehicle motor in which output of an electric motor is transmitted to a wheel via a variable transmission, including the following steps:

> acquiring motor rotation speed M of the electric motor;
> determining target motor power W that is desired to be output from the electric motor independent of transmission gear ratio of the transmission and driving the electric motor at target motor torque t that is obtained by dividing the target motor power W by the motor rotation speed M.

According to one illustrative aspect of the invention, there is provided an electric vehicle power unit in which output of an electric motor is transmitted to a wheel via a variable transmission, the electric vehicle power unit comprising:

> the electric motor;
> a rotation speed acquisition unit that acquires motor rotation speed M of the electric motor;
> a target motor power determination unit that determines target motor power W of the electric motor which is desired to be output from the electric motor independent of transmission gear ratio of the transmission;
> a target motor torque calculation unit that calculates a target motor torque t that is obtained by dividing the target motor power W by the motor rotation speed M; and
> a motor control unit that drives the electric motor at the target motor torque t.

According to one illustrative aspect of the invention, there is provided an electric vehicle comprising:

> an electric motor;
> variable transmission to which a driving force of the electric motor is transmitted;
> a wheel to which the driving force of the electric motor is transmitted via the transmission;
> a rotation speed acquisition unit that acquires motor rotation speed M of the electric motor;
> a target motor power determination unit that determines a target motor power W of the electric motor which is desired to be output from the electric motor independent of transmission gear ratio of the transmission;
> a target motor torque calculation unit that calculates target motor torque t that is obtained by dividing the target motor power W by the motor rotation speed M; and
> a motor control unit that drives the electric motor at the target motor torque t.

The target motor power W may be gradually decreased near the target speed V2 so that the target motor power W becomes zero when the wheel speed or the vehicle speed V is target speed V2.wheel

According to one illustrative aspect of the invention, the input means may detect a tilt angle of a road surface as the driving environment. The input means may be input means that is operable by a user.

According to one illustrative aspect of the invention, when the motor rotation speed M is less than a predetermined lower limit value ML, the target motor torque t may be set as a predetermined value t1 regardless of the motor rotation speed M.

According to one illustrative aspect of the invention, when the motor rotation speed M is equal to or larger than a predetermined upper limit value MH, the target motor torque t may be set to be zero regardless of the motor rotation speed M.

According to one illustrative aspect of the invention, rotational acceleration A of the electric motor may be calculated from the motor rotation speed M, and the target motor power W may be set to be zero when the rotational acceleration A is equal to or larger than the upper limit value AH.

According to one illustrative aspect of the invention, the target motor power W may be determined in response to the input from the input means provided in a vehicle.

According to the illustrative aspects of the invention, the constant torque acts on the wheel regardless of the selected transmission gear ratio. Therefore, the electric vehicle can be provided with operation stability and riding comfort even when an assist force of the electric motor acts. The invention is defined by the claims.

BRIEF DESCRIPTION OF THE DRAWINGS

Fig. 1 is a left side view illustrating an electric bicycle according to an embodiment of the present invention.
Fig. 2 is a system block diagram of the electric bicycle according to the embodiment.
Fig. 3 is a flowchart illustrating a method for controlling an electric vehicle motor according to the embodiment during assisted driving.
Fig. 4 is a view illustrating a relationship between wheel speed and target motor power in the method for controlling the electric vehicle motor according to the embodiment.
Fig. 5 is a view illustrating a relationship between vehicle speed and wheel torque in the method for controlling the electric vehicle motor according to the embodiment.
Fig. 6 is a map used to determine target motor torque in a method for controlling an electric vehicle motor according to a comparative example.
Fig. 7 is a view illustrating a relationship between wheel speed and wheel torque in the method for controlling the electric vehicle motor according to the comparative example.
Fig. 8 is a view illustrating a relationship between stepping force, wheel speed, and target motor power in the method for controlling the electric vehicle motor according to the embodiment.
Fig. 9 is a flowchart illustrating the method for controlling the electric vehicle motor according to the embodiment during push-walking assist.

DETAILED DESCRIPTION

Hereinafter, an exemplary embodiment of an electric vehicle according to the present invention is described referring to the accompanied drawings.

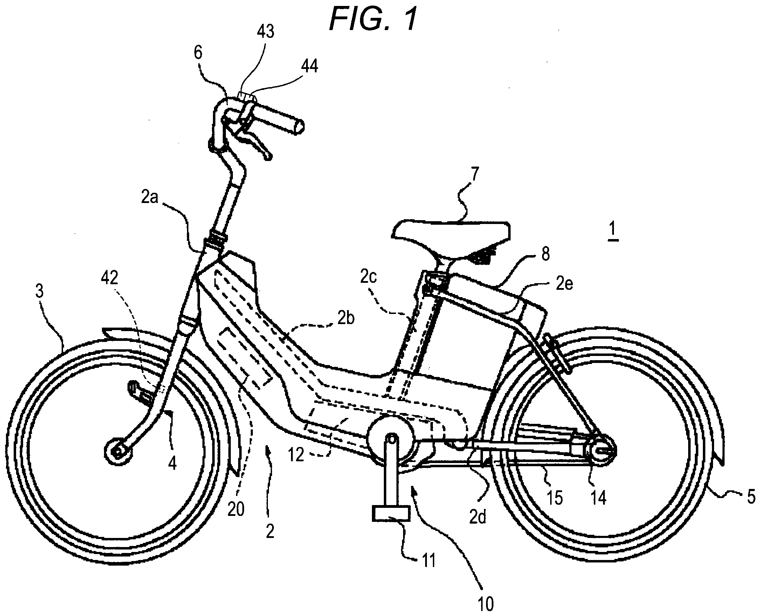

Fig. 1 is a side view illustrating an electric bicycle 1 according to an example of an electric vehicle. In the embodiment described hereinafter, left and right means left and right viewed in a riding condition. The electric bicycle 1, which is an electric vehicle illustrated in Fig. 1, is driven by resultant force of human power and driving force of an electric motor.

A vehicle body 2 of the electric bicycle 1 includes a head pipe 2a, a down tube 2b, a seat tube 2c, a pair of left and right chain stays 2d, and a pair of left and right seat stays 2e.

The down tube 2b obliquely extends downward from a rear side of the head pipe 2a. The seat tube 2c extends upward from a rear portion of the down tube 2b. The pair of left and right chain stays 2d are connected to the rear portion of the down tube 2b. The pair of left and right seat stays 2e connect an upper portion of the seat tube 2c with rear end portions of the chain stays 2d in an approximately triangular shape.

A front fork 4 is supported on the head pipe 2a in such a manner as to be rotatable in left and right directions. A front wheel 3 is supported on a lower end of the front fork 4 in a rotatable manner. A wheel speed sensor 42 that detects a wheel speed V of the front wheel 3 is attached to the front fork 4.

A steering handle 6 is attached to an upper end of the head pipe 2a in such a manner as to be rotatable in left and right directions. A transmission operator 43 and a push-walking assist switch 44 are attached to the steering handle 6.

A saddle 7 is attached to an upper end of the seat tube 2c. A battery 8 is mounted on a rear side of the seat tube 2c. A rear wheel 5 is supported on rear ends of the chain stays 2d in a rotatable manner.

A power unit 10 is provided on a lower side of the down tube 2b. The power unit 10 includes a pedal 11 to which a stepping force from a rider is input, an electric motor 12 that is driven by the battery 8, a transmission 14 and a chain 15. The power unit 10 further includes a controller 20 that controls driving of the electric motor 12.

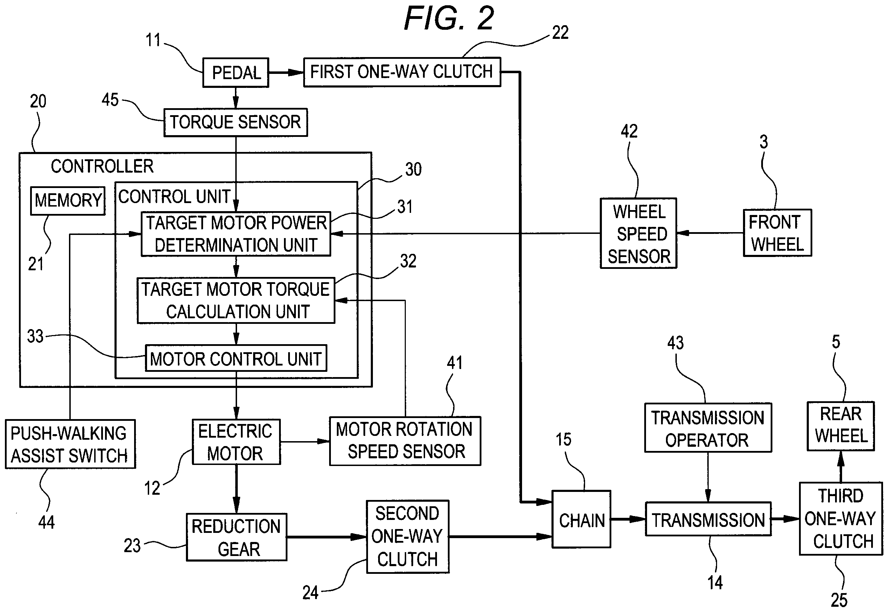

Fig. 2 is a system block diagram of the electric bicycle 1.

The stepping force from the pedal 11 is input into the chain 15 via a first one-way clutch 22. The driving force of the electric motor 12 is input into the chain 15 via a reduction gear 23 and a second one-way clutch 24. In other words, the resultant force of the stepping force from the pedal 11 and the driving force from the electric motor 12 acts on the chain 15. In this manner, the resultant force of the stepping force from the pedal 11 and the driving force from the electric motor 12 is transmitted to the transmission 14. Output of the transmission 14 is transmitted to the rear wheel 5 via a third one-way clutch 25.

The transmission 14 can be switched to a low gear, a middle gear and a high gear in an ascending order of a transmission gear ratio, for example. The transmission gear ratio of the transmission 14 can be switched by the transmission operator 43 that is attached to the steering handle 6. The transmission 14 transmits the driving force transmitted from the chain 15 to the rear wheel 5 in response to the selected transmission gear ratio.

The controller 20 includes a memory 21 and a control unit 30. The control unit 30 has a central processing unit (CPU) that performs various processing operations. The memory 21 has a read-only memory (ROM) that stores various programs executed by the control unit 30, and a random access memory (RAM) that is used as a work area for data storage and program execution.

The control unit 30 includes a target motor power determination unit 31, a target motor torque calculation unit 32 and a motor control unit 33. Into the target motor power determination unit 31, output of the wheel speed sensor 42 that detects the wheel speed V of the front wheel 3, output of the push-walking assist switch 44, and output of a torque sensor 45 that detects the stepping force from the pedal 11 can be input. Output of a motor rotation speed sensor 41 can be input into the target motor torque calculation unit 32.

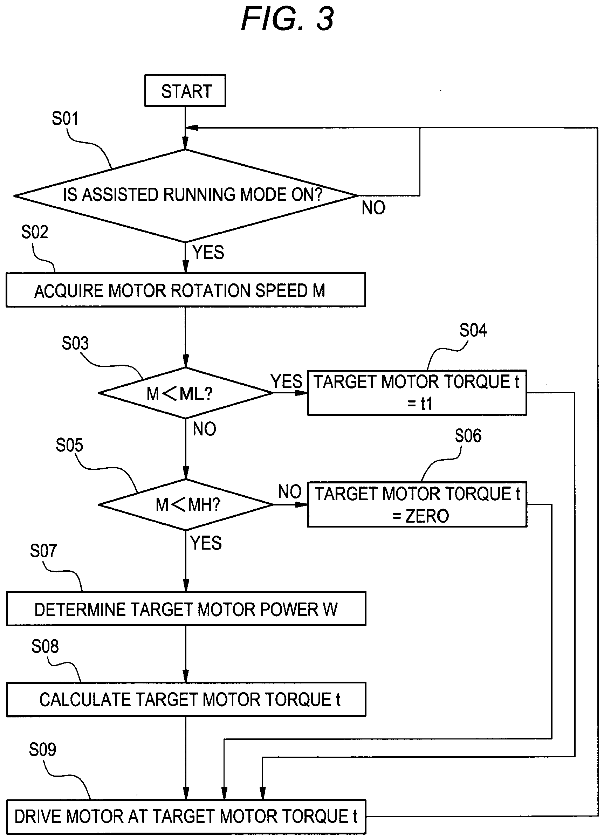

Fig. 3 is a flowchart illustrating a method for controlling the electric motor 12 that is executed when the electric bicycle 1 runs while being assisted (hereinafter, "assisted running"). During the assisted running, the driving force of the electric motor 12 is transmitted to the rear wheel 5 and the driving force, which is larger than a pedal stepping force of the rider, is generated in the rear wheel 5. The control of the electric motor 12 by the control unit 30 at this time is referred to as "assisted running control".

When the stepping force from the pedal 11 is input into the torque sensor 45, the signal from the torque sensor 45 is input into the control unit 30. When an input signal from the torque sensor 45 is received, the control unit 30 determines that an assisted running mode of the electric bicycle 1 is ON. When the assisted running mode is ON, the control unit 30 starts the assisted running control of the electric motor 12 (step S01).

Subsequently, the driving of the electric motor 12 is started and the target motor power determination unit 31 acquires motor rotation speed M of the electric motor 12 from the motor rotation speed sensor 41 that functions as a motor rotation speed acquisition unit (step S02).

The target motor power determination unit 31 compares the acquired motor rotation speed M with a predetermined lower limit value ML (step S03). If the motor rotation speed M is less than the predetermined lower limit value ML (step S03: Yes), the target motor torque calculation unit 32 sets a target motor torque t as a constant value t1 regardless of the motor rotation speed M (step S04). Then, the motor control unit 33 drives the electric motor 12 at the target motor torque t1 (step S09).

Based on the target motor torque t, a command value that is input into the electric motor 12 is calculated so that an output torque of the electric motor 12 is equal to t. In fact, the command value is expressed as a current value, the motor control unit 33 calculates a current value according to the target motor torque t and the current value is sent to the electric motor 12 as a command.

On the other hand, if the motor rotation speed M is equal to or larger than the lower limit value ML (step S03: No), the target motor power determination unit 31 also compares the motor rotation speed M with a predetermined upper limit value MH (step S05).

If the motor rotation speed M is equal to or larger than the upper limit value MH (step S05: No), the target motor torque calculation unit 32 sets the target motor torque t to be zero regardless of the motor rotation speed M. Then, the motor control unit 33 controls so that the target motor torque t of the electric motor 12 is equal to zero (step S06).

If the motor rotation speed M is less than the upper limit value MH (step S05: Yes), the target motor power determination unit 31 determines a target motor power W (step S07). In the embodiment, the target motor power W is determined as follows.

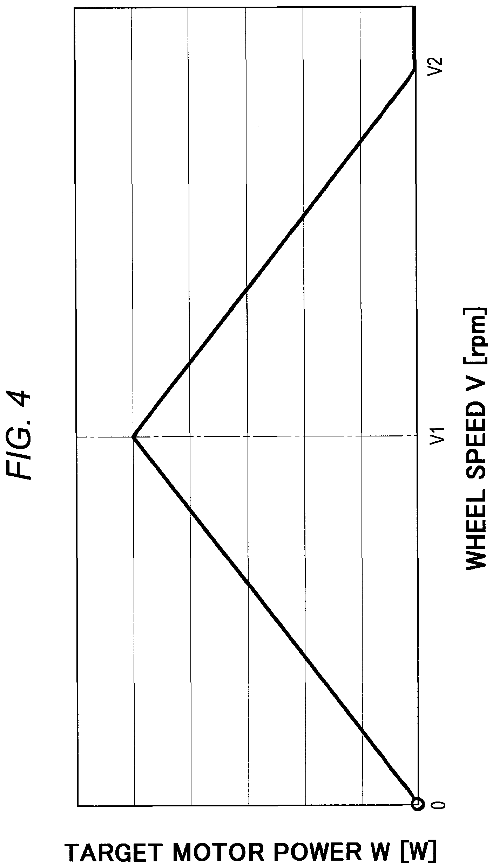

Fig. 4 is a map defining a relationship between the wheel speed V of the front wheel 3 and the target motor power W. The target motor power determination unit 31 determines the target motor power W from the relationship with the wheel speed V based on the map of Fig. 4 (step S07).

In a range in which the wheel speed V is equal to or larger than zero and less than a threshold value V1, the target motor power W is increased monotonically in response to an increase in the wheel speed V. When the wheel speed V is equal to or larger than the threshold value V1 and less than a regulation speed V2, the target motor power W is decreased in response to the increase in the wheel speed V. At this time, when the wheel speed V is near the regulation speed V2, it is preferable to gradually decrease the target motor power W so that the target motor power W is equal to zero when the wheel speed V is equal to the regulation speed V2. Herein, the threshold value V1 can be set to be any value. Also, the regulation speed V2 is a value determined by, for example, laws or regulations. According to the laws or regulations, no assist force is generated when the speed of the electric bicycle 1 is equal to or higher than a predetermined speed.

Next, the target motor torque calculation unit 32 calculates the target motor torque t that is obtained by dividing the determined target motor power W by the motor rotation speed M which is obtained by the motor rotation speed sensor 41 (t=W/M) (step S08). Then, the motor control unit 33 drives the electric motor 12 at the calculated target motor torque t (step S09).

When the motor control unit 33 drives the electric motor 12 at the target motor torque t, the control unit 30 returns to step S01, and repeats the above steps S01 to S09 as long as the assisted running mode remains ON.

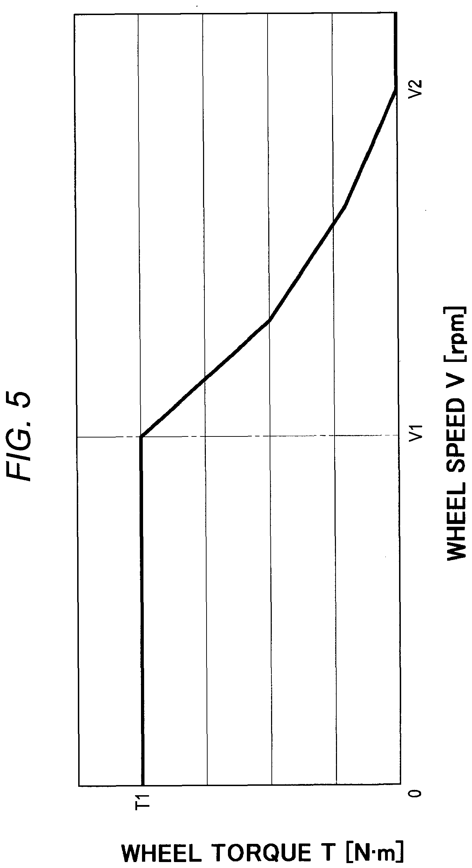

Fig. 5 is a graph illustrating a relationship between the wheel speed V of the front wheel 3 and a wheel torque T applied to the rear wheel 5 during the assisted running when the above-described control is executed. As illustrated herein, in the method for controlling the electric motor 12 according to the embodiment, when the wheel speed V is a certain value, the wheel torque T is a constant value regardless of a transmission gear ratio G. Further, in the embodiment, in the area in which the wheel speed V is equal to or larger than zero and less than the threshold value V1, the wheel torque T is a constant value T1. Furthermore, in an area in which the wheel speed V is equal to or larger than the threshold value V1, the wheel torque T decreases toward the regulation speed V2, and in an area in which the wheel speed V is equal to or larger than the regulation speed V2, the wheel torque T is zero.

Hereinafter, the reason why the wheel torque T has the constant value regardless of the transmission gear ratio G will be described. The wheel torque T [N·m] can be expressed as follows, by using the target motor power W [W], the motor rotation speed M [rpm], and a coefficient $k_1$, when the transmission gear ratio is G.

$$T=k_1(W/M)/G \qquad (1)$$

Herein, the motor rotation speed M is expressed as follows from a relationship between the wheel speed V [rpm] and the transmission gear ratio G.

$$M=V/G \qquad (2)$$

Herein, by substituting Formula (2) into Formula (1), Formula (3) is obtained.

$$T=k_1 \cdot W/V \qquad (3)$$

In other words, Formula (3) shows that the wheel torque T is not influenced by the transmission gear ratio G. In the embodiment, in the area in which the wheel speed V is equal to or larger than zero and less than the threshold value V1, the wheel torque T1 is set to be constant(W=T1×V). The wheel torque T1 is, as shown in Fig. 4, a gradient in the area in which the wheel speed V is equal to or larger than zero and less than the threshold value V1.

Therefore, in the method for controlling an electric vehicle motor according to the embodiment, no matter what transmission gear ratio G is selected in the transmission 14, the constant wheel torque corresponding to the target motor power W is transmitted from the electric motor 12 to the rear wheel 5. In other words, even when the transmission gear ratio G is changed during the assisted running, the constant wheel torque corresponding to the target motor power W acts on the rear wheel 5. In this manner, the behavior of the electric bicycle 1 is stable regardless of the transmission gear ratio G. Therefore, the electric bicycle 1 is provided with a high riding comfort and stable behavior regardless of the transmission gear ratio G.

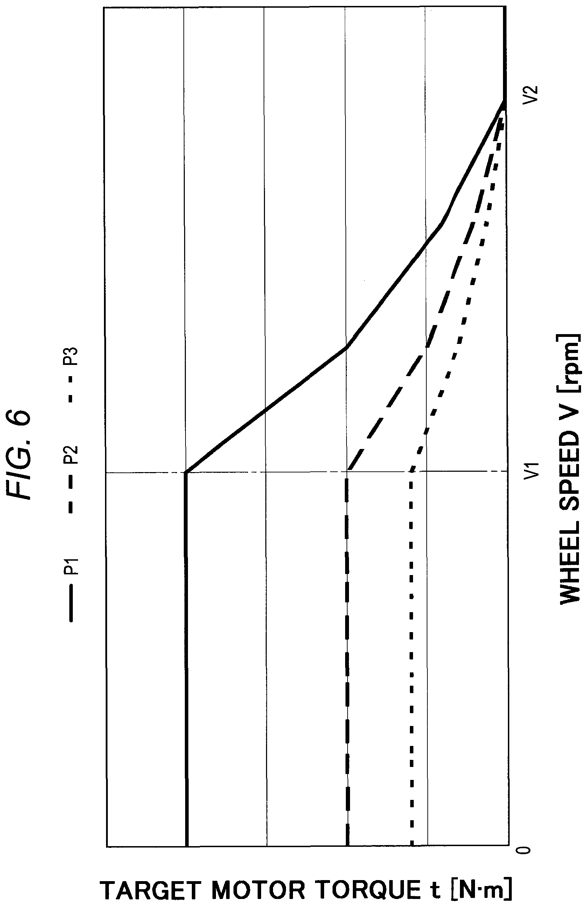

Fig. 6 is a map used to determine a target motor torque in a method for controlling an electric motor according to a comparative example. In the comparative example, as is the case with the above-described JP-A-11-59557, the electric motor is controlled in such a manner that a predetermined torque is output in response to pedal stepping force P1, P2, and P3. The stepping force P1, P2, and P3 have a relationship of P1>P2>P3.

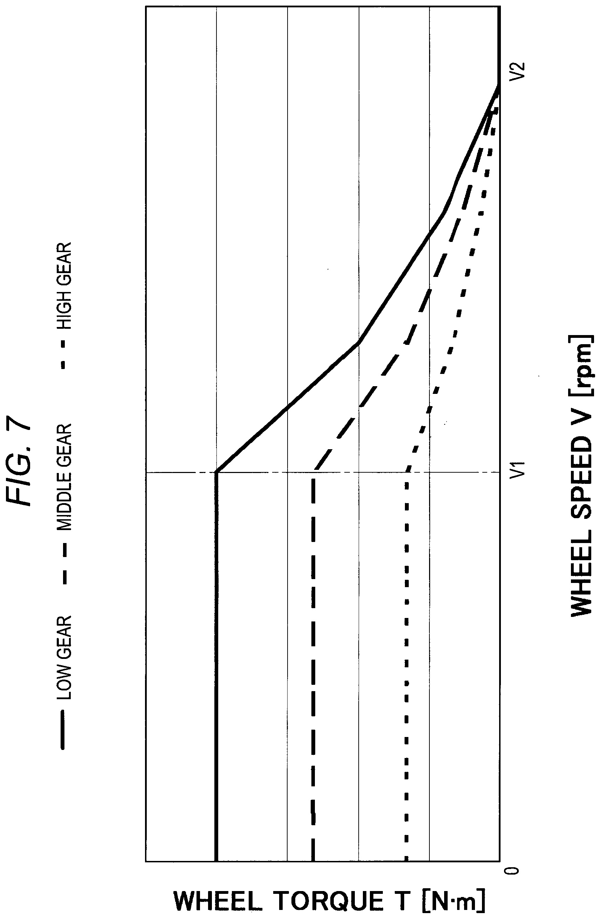

Fig. 7 is a view illustrating a relationship between wheel speed V and wheel torque T that acts on a wheel to which driving force of the electric motor is transmitted in an electric bicycle whose electric motor is controlled as illustrated in Fig. 6. In the comparative example, the target motor torque of the electric motor is determined in response to the stepping force. In other words, when the driving force of the electric motor is transmitted to a rear wheel via a transmission, even if the electric motor is driven at the same target motor torque, the wheel torque T that is input into the rear wheel is varied in response to the transmission gear ratio of the transmission.

This will be described in more detail hereinafter. Herein, considering the wheel torque T [N·m] of the rear wheel, while assuming that the transmission gear ratio of a middle gear is 1, the transmission gear ratio of a low gear is 0.5, and the transmission gear ratio of a high gear is 1.5 in the transmission 14. In this case, even if the electric motor is driven at the same target motor torque, the wheel torque T that acts on the rear wheel when the low gear is selected in the transmission 14 is twice the wheel torque that acts on the rear wheel when the middle gear is selected. Further, when the low gear is selected in the transmission 14, even if the electric motor is driven at the same target motor torque, the wheel torque T that acts on the rear wheel is three times the wheel torque T that acts on the rear wheel when the high gear is selected.

In this manner, in the method for controlling the electric motor according to the comparative example illustrated in Fig. 6, the wheel torque T varies significantly when the transmission gear ratio differs as illustrated in Fig. 7. For example, when the low gear is selected from the middle gear in the transmission, the wheel torque T that is larger than what is expected by the rider is abruptly input into the rear wheel. Therefore, the larger acceleration force abruptly acts on the rider, and the behavior of the electric bicycle becomes unstable.

In the controlling method according to the comparative example, in order to solve the instability of the behavior, it is necessary to correct the target motor torque of the electric motor in response to the transmission gear ratio. However, in order to do so, transmission gear ratio detection means for acquiring the selected transmission gear ratio, and input means for inputting the transmission gear ratio into a control unit are required. As such, costs for manufacturing the electric bicycle increase.

However, in the method for controlling the electric vehicle motor according to the embodiment described above, even without the transmission gear ratio detection means, it is possible to apply the constant wheel torque T to the rear wheel 5 regardless of the transmission gear ratio G. Therefore, it is possible to achieve good assisted feeling at low costs.

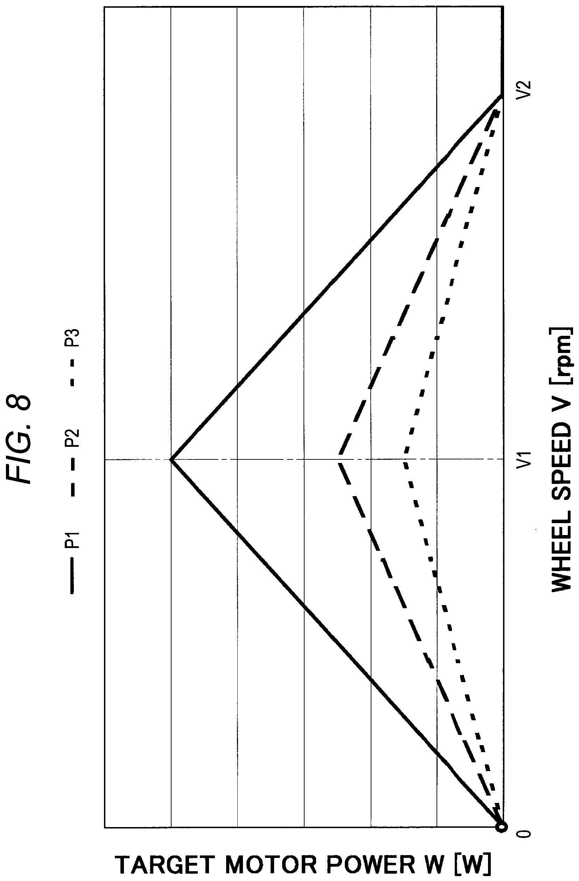

Further, in the above description, the target motor power W is determined in response to the wheel speed V alone, however the target motor power W may be determined in response to the stepping force that is input into the pedal 11. Fig. 8 is a map illustrating a relationship between the stepping force P1, P2, and P3, the wheel speed V and the target motor power W in the method for controlling the electric vehicle motor according to the embodiment. The stepping force P1, P2 and P3 have the relationship of P1>P2>P3.

When the map of Fig. 8 is used, the target motor power W is determined to be small when the rider slightly steps on the pedal 11. Then, the relatively small wheel torque T is applied to the rear wheel 5. In other words, the assist amount is small. In contrast, the target motor power W is determined to be large when the rider mightily steps on the pedal 11. Then, the relatively large wheel torque T is applied to the rear wheel 5. In other words, the assist amount is large.

In this manner, by determining the target motor power W in response to the pedal stepping force P, the assist amount of the electric motor 12 can be adjusted in response to the pedal stepping force. Further, even in this case, the wheel torque T that acts on the rear wheel 5 does not depend on the transmission gear ratio G as described above. Therefore, the behavior of the electric bicycle 1 is stable even in a case where the assist amount is large.

Furthermore, according to the method for controlling the electric motor 12 of the embodiment, before the target motor power W is determined in response to the wheel speed V, when the motor rotation speed M is less than the lower limit value ML (step S03: Yes), the target motor torque t is set as the constant value t1 regardless of the motor rotation speed M (step S04) and the electric motor 12 is driven (step S09).

In other words, in step S07, it is prevented the target motor torque t from being setting excessive value when the motor rotation speed M is low. Therefore, it is possible to prevent the large wheel torque T from acting on the rear wheel 5 when the motor rotation speed M is low, and it is possible to provide the electric bicycle 1 with a stable riding comfort.

Also, according to the method for controlling the electric vehicle motor of the embodiment, when the motor rotation speed M is equal to or larger than the upper limit value MH (step S05: No), the target motor torque t is set to be zero. Therefore, the rear wheel 5 is prevented from rotating at a high speed with the rotation speed being equal to or larger than a predetermined value.

Furthermore, according to the method for controlling the electric motor 12 of the embodiment, the target motor power W is gradually decreased near the regulation speed V2 so that the target motor power W becomes zero at the regulation speed V2. In this manner, even if the wheel speed V frequently changes around the regulation speed V2, the target motor power W changes slightly, and the behavior of the electric bicycle 1 is stable.

Furthermore, when the electric motor 12 begins to rotate from a stopped state, there is a concern that behavior of the vehicle could becomes less stable, depending upon how the driving force is transmitted from the electric motor 12 to the chain 15. In other words, the electric motor 12 is driven in a no-load state until the driving force of the electric motor 12 is transmitted to the chain 15. Therefore, it is likely that the electric motor 12 rotates at a high speed. If the electric motor 12 that rotates at the high speed is connected to the chain 15 that rotates at a relatively low speed or is in a stopped state, the rider is bothered by a feeling of strangeness.

Therefore, in the embodiment described above, it is preferable to set the target motor power W to be zero when the electric motor 12 is in the no-load state. Specifically, the control unit 30 calculates rotational acceleration A from the motor rotation speed M at the moment immediately after the rotation of the electric motor 12. When the rotational acceleration A is equal to or larger than a predetermined upper limit value AH, the control unit 30 determines that the electric motor 12 is in a no-load rotation period. In the no-load rotation period, the target motor power determination unit 31 sets the target motor power W to be zero.

In this manner, when the acceleration of the electric motor 12 reaches the predetermined value after the electric motor 12 is driven in the no-load state, an acceleration larger than that does not act on the electric motor 12. In other words, eventually, the electric motor 12 rotates at the constant speed. Accordingly, the electric motor 12 is connected to the chain 15 at a constant rotational speed on each occasion, and thus the rider is unlikely to be bothered by the feeling of strangeness.

Furthermore, when the electric motor 12 is connected to the chain 15, the negative motor rotational acceleration A acts on the electric motor 12. Therefore, the control unit 30 can define the no-load rotation period as a period from the stopped state of the electric motor 12 until when the rotational acceleration A has a negative value.

Furthermore, the transmission gear ratio G of the transmission 14 exerts no influence until the electric motor 12 is connected to the chain 15. Therefore, the wheel torque T that acts on the rear wheel 5 is not influenced by the transmission gear ratio G no matter what function is set for the target motor power W of the electric motor 12.

Furthermore, in the embodiment described above, the method for controlling the electric vehicle motor according to the present invention is applied to an example in which the rider is ride on the vehicle and the vehicle is running while being assisted. However, as described below, the present invention may be applied to controlling of the electric vehicle motor in push-walking assist.

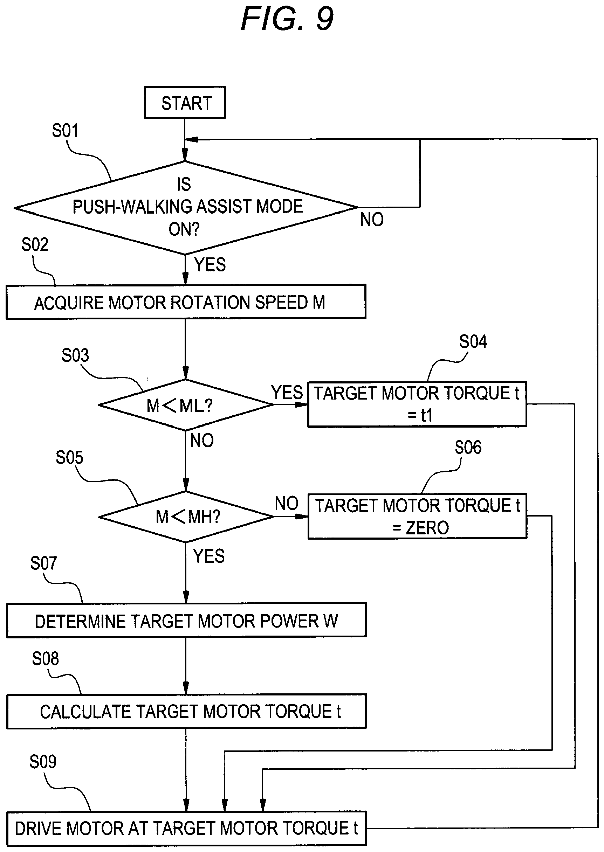

For an example, when the vehicle is on the sloping road and the rider gets off the electric bicycle 1 and push and walk the electric bicycle 1, the rider is required relatively large pushing force. According to the push-walking assist, the driving force is applied to the rear wheel 5 by the electric motor 12 for reducing the pushing force of the rider. The method for controlling the electric vehicle motor described above can be applied even during the push-walking assist. Fig. 9 is a flowchart related to control during the push-walking assist. Fig. 9 is substantially the same as the flowchart of Fig. 3, which is related to the assisted running.

In step S01, when input from the push-walking assist switch 44 is input into the target motor power determination unit 31, the target motor power determination unit 31 determines that the electric bicycle 1 is in the push-walking assist mode.

In this case, the push-walking assist switch 44 may be an ON/OFF switch that is capable of switching only ON/OFF of the assist mode, and may be the input means that is capable of setting strength of an assist force in stages. For example, when the input means that is capable of inputting multi-staged input values is used, it is preferable that the target motor power W be set according to the stage of the input from the input means so that the assist force increases. In this manner, the stronger assist force can act on the rear wheel 5 on a steep hill, and it is possible to achieve a good feeling of being assisted.

As the input means that sets the assist force in stages, throttle devices, slide switches, rotating levers, pressure-sensitive switches, and various sensors can be employed. As an example of the sensors, a tilt angle sensor that detects a tilt angle of a road surface may be used, and the target motor power W may be set in such a manner that the assist force which is increased in proportion to the tilt angle acts on the rear wheel 5 in response to the input of the tilt angle sensor.

If the method for controlling the electric vehicle motor according to the present invention is applied to push-walking assist control, regardless of the transmission gear ratio of the transmission 14, the constant wheel torque T acts on the rear wheel 5 on each occasion. In this manner, even when a low transmission gear ratio is selected in the transmission 14, the wheel torque T that is larger than what is expected does not act, and thus the rider pushes and walks the electric bicycle while the behavior of the electric bicycle remains stable state.

In particular, when the electric bicycle 1 begins to move from the stopped state, the transmission gear ratio cannot be shifted by the transmission 14. Therefore, the method for controlling the electric vehicle motor according to the present invention is useful in that the constant wheel torque T can act on the rear wheel 5 regardless of the transmission gear ratio.

In the electric bicycle 1 according to the embodiment, the wheel speed sensor is not provided in the rear wheel 5 that is a driving wheel, but the wheel speed sensor 42 is provided in the front wheel 3. In this case, if the rear wheel 5 is lifted with the front wheel 3 being in contact with the ground, the wheel speed V is detected as between zero and a low speed. At this time, if the push-walking assist mode is turned ON, the assist force from the electric motor 12 is input into the rear wheel 5 in the no-load state. In this case, there is a concern that the rotation speed of the rear wheel 5 could increase unexpectedly.

However, according to the method for controlling the electric vehicle motor of the embodiment, even in this case, the target motor torque t is set to be zero (step S06) when the motor rotation speed M reaches the predetermined upper limit value MH (step S05: No). In this manner, rotational speed of the rear wheel 5 is prevented from becoming excessively high. Therefore, even if the rear wheel 5 alone is lifted, the rear wheel 5 is prevented from rotating at a high speed, and thus the electric bicycle 1 with stable behavior can be provided.

Furthermore, the method for controlling the electric vehicle motor, a power unit for an electric vehicle, and an electric vehicle according to the present invention are not limited to the embodiment and the modification example described above, but appropriate modifications and improvements are possible.

For example, in the above-described embodiment, a power-assisted bicycle is described as an example of the electric vehicle. However, the present invention is not limited thereto. For example, the present invention can be applied to an electric vehicle in which the output of the electric motor is transmitted to the ground surface via the transmission, such as an electric scooter, a hybrid car, and an electric car.

Also, in the embodiment, the pedal stepping force from the rider and the driving force of the electric motor 12 act on the rear wheel 5. However, the driving force may be configured to be input into the front wheel 3. Also, the wheel on which the pedal stepping force acts and the wheel on which the driving force of the electric motor 12 acts may be different from each other.

In the embodiment, the electric motor 12 is provided on the lower side of the down tube 2b. However, the electric motor 12 may be provided inside a hub of the rear wheel 5 or inside a hub of the front wheel 3.

In the embodiment described above, the target motor power W is determined in response to the vehicle speed. However, the present invention is not limited thereto. For example, the target motor power W can be determined in response to the input from any input means. For example, it is possible to use the wheel speed sensor 42 that detects the wheel speed V described above as the input means detecting driving environment. In addition, it is possible to employ a vehicle speed sensor that detects the vehicle speed as the driving environment, an acceleration sensor that detects the acceleration as the driving environment, a tilt angle sensor that detects the tilt angle of the ground surface as the driving environment, etc. In this manner, it is possible to provide the electric vehicle with the good feeling of being assisted in response to the driving environments without the rider being conscious thereof.

Also, for example, the target motor power may be determined using the remaining amount of the battery as the driving environment. In this case, it is possible to make the output of the electric motor 12 uniform up to a target cruising distance allowing for the target cruising distance and the calculated capacity of the battery.

Also, the target motor power W may be determined according to the input from the input means that can be operated by a user. In this case, as the input means, ON/OFF switches, multi-staged switches such as slide switches that are capable of outputting a plurality of output values, throttle devices that are capable of outputting continuously changing output values, rotating levers, pressure-sensitive switches and the like can be used. The target motor power W can be set so that the large assist force is output when the large assist force is required by the user.

Also, the control unit 30 is not limited to executing only the method for controlling the electric vehicle motor in which the target motor power W is determined so that the constant wheel torque T acts on the rear wheel 5 (motor driving wheel) regardless of the transmission gear ratio G as described above.

For example, the control unit 30 may execute both of the method for controlling the electric vehicle motor in which the target motor torque t is determined according to the pedal stepping force P as illustrated in Fig. 6 and the method for controlling the electric vehicle motor according to the embodiment described above at the same time. Specifically, for example, the control unit 30 may be configured in such a manner as to execute the control for determining the target motor torque t according to the pedal stepping force P during ordinary driving, and execute the controlling method in which the target motor power W is determined, regardless of the transmission gear ratio G, so that the constant wheel torque T acts on the motor driving wheel during the push-walking as described in the embodiment.

**Claims**

1. A method for controlling an electric power-assisted vehicle in which output of an electric motor (12) is transmitted to a wheel (5) via a transmission with a variable gear ratio (14), **characterized in that** the method comprising:

   acquiring motor rotation speed M of the electric motor (12);
   determining a target motor power W that is desired to be output from the electric motor (12) as a function of the wheel speed or vehicle speed V of the electric vehicle independent of the transmission gear ratio of the transmission (14) and driving the electric motor (12) at target motor torque t that is obtained by dividing the target motor power W by the motor rotation speed M, in order to provide an assisted wheel torque, provided by the electric motor (12), which is the same for all gear ratios.

2. The method for controlling an electric vehicle motor according to claim 1, wherein the target motor power W is gradually decreased near the target speed V2 so that the target motor power W becomes zero when the wheel speed or the vehicle speed V is target speed V2.

3. The method for controlling an electric vehicle motor according to claim 1, the target motor power W is determined by considering a tilt angle of a road surface.

4. The method for controlling an electric vehicle motor according to claim 1, the target motor power W is determined by considering an input that is operable by a user.

5. The method for controlling an electric vehicle motor according to any one of claims 1 to 4, when the motor rotation speed M is less than a predetermined lower limit value ML, the target motor torque t is set as a predetermined value t1 regardless of the motor rotation speed M.

6. The method for controlling an electric vehicle motor according to any one of claims 1 to 5, wherein, when the motor rotation speed M is equal to or larger than a predetermined upper limit value MH, the target motor torque t is set to be zero regardless of the motor rotation speed M.

7. The method for controlling an electric vehicle motor according to any one of claims 1 to 6, wherein rotational acceleration A of the electric motor is calculated from the motor rotation speed M, and wherein the target motor power W is set to be zero when the rotational acceleration A is equal to or larger than the upper limit value AH.

8. The method for controlling an electric vehicle motor according to any one of claims 1 to 7, wherein the target motor power W is determined in response to the input from the input means provided in a vehicle.

9. An electric vehicle power unit (10) in which output of an electric motor (12) is transmitted to a wheel (5) via a transmission with a variable gear ratio (14), the electric vehicle power unit (10) comprising:

the electric motor (12);
a rotation speed acquisition unit (41) that acquires motor rotation speed M of the electric motor (12);
a target motor power determination unit (31) that determines target motor power W of the electric motor (12) which is desired to be output from the electric motor (12) in as a function of the wheel speed or vehicle speed V of the electric vehicle independent of the transmission gear ratio of the transmission (14);
a target motor torque calculation unit (32) that calculates a target motor torque t that is obtained by dividing the target motor power W by the motor rotation speed M; and
a motor control unit (33) that drives the electric motor (12) at the target motor torque t, in order to provide an assisted wheel torque, provided by the electric motor (12), which is the same for all gear ratios.

10. An electric vehicle comprising an electric vehicle power unit as the one disclosed in claim 9, further comprising:
the transmission with a variable gear ratio (14) to which a driving force of the electric motor (12) is transmitted; the wheel (5) to which the driving force of the electric motor (12) is transmitted via the transmission (14).

**Patentansprüche**

1. Eine Methode zum Steuern eines elektrisch leistungsunterstützten Fahrzeuges, bei welchem die Ausgabe von einem Elektromotor (12) auf ein Rad (5) über ein Getriebe (14) mit einem variablen Übersetzungsverhältnis übertragen wird, **dadurch gekennzeichnet, dass** die Methode umfasst:

erfassen der Motordrehzahl M des Elektromotors (12);
bestimmen einer Soll-Motorleistung W, die als Ausgabe von dem Elektromotor (12) gewünscht ist, als eine Funktion von der Raddrehzahl oder der Fahrzeuggeschwindigkeit V des Elektrofahrzeuges, unabhängig von dem Getriebe-Übersetzungsverhältnis des Getriebes (14) und antreiben des Elektromotors (12) bei einem Soll-Motormoment t, das erhalten wird durch Teilen der Soll-Motorleistung W durch die Motordrehzahl M, um ein unterstützendes Radmoment bereitzustellen, das durch den Elektromotor (12) bereitgestellt wird, welches für alle Übersetzungsverhältnisse das gleiche ist.

2. Die Methode zum Steuern eines Elektro-Fahrzeug-Motors gemäß Anspruch 1, wobei die Soll-Motorleistung W nahe der Soll-Geschwindigkeit V2 schrittweise verringert wird, so dass die Soll-Motorleistung W Null wird, wenn die Raddrehzahl oder die Fahrzeuggeschwindigkeit V der Soll-Geschwindigkeit V2 entspricht.

3. Die Methode zum Steuern eines Elektro-Fahrzeug-Motors gemäß Anspruch 1, die Soll-Motorleistung W durch Berücksichtigung eines Neigungswinkels von einer StraßenOberfläche bestimmt wird.

4. Die Methode zum Steuern eines Elektro-Fahrzeug-Motors gemäß Anspruch 1, die Soll-Motorleistung W durch Berücksichtigung einer Eingabe, die durch den Nutzer bedienbar ist, bestimmt wird.

5. Die Methode zum Steuern eines Elektro-Fahrzeug-Motors gemäß einem der Ansprüche 1 bis 4, das Soll- Motormoment t als ein vorbestimmter Wert t1 eingestellt ist ohne Rücksicht auf die Motordrehzahl M, wenn die Motordrehzahl M niedriger ist als ein vorbestimmter unterer Grenzwert ML.

6. Die Methode zum Steuern eines Elektro-Fahrzeug-Motors gemäß einem der Ansprüche 1 bis 5, das Soll- Motormoment t auf Null eingestellt ist ohne Rücksicht auf die Motordrehzahl M, wenn die Motordrehzahl M gleich oder größer als ein vorbestimmter oberer Grenzwert ML ist.

7. Die Methode zum Steuern eines Elektro-Fahrzeug-Motors gemäß einem der Ansprüche 1 bis 6, wobei die Rotationsbeschleunigung A des Elektromotors aus der Motordrehzahl M berechnet wird, und wobei die Soll-Motorleistung W auf Null eingestellt ist, wenn die Rotationsbeschleunigung A gleich oder größer als ein oberer Grenzwert AH ist.

8. Die Methode zum Steuern eines Elektro-Fahrzeug-Motors gemäß einem der Ansprüche 1 bis 7, wobei die Soll-Motorleistung W bestimmt ist in Erwiderung auf die Eingabe von der Eingabe-Vorrichtung, die in einem Fahrzeug bereitgestellt wird.

9. Eine Elektrofahrzeug-Leistungseinheit (10), in welcher die Ausgabe von einem Elektromotor (12) an ein Rad (5) über ein Getriebe (14) mit einem variablen Übersetzungsverhältnis übertragen wird, wobei die Elektrofahrzeug-Leistungseinheit (10) umfasst:

den Elektromotor (12);
eine Rotationsgeschwindigkeit-Erfassungseinheit (41), die die Motordrehzahl M des Elektromotors (12) erfasst;
eine Soll-Motorleistung-Bestimmungseinheit (31), die die Soll-Motorleistung W des Elektromotors (12) bestimmt, die als Ausgabe von dem Elektromotor (12) gewünscht ist, als eine Funktion von der Raddrehzahl oder der Fahrzeuggeschwindigkeit V des Elektrofahrzeuges, unabhängig von dem Getriebe-Übersetzungsverhältnis des Getriebes (14); und
eine Motor-Steuereinheit (33), die den Elektromotor (12) bei dem Soll-Motormoment t antreibt, um ein unterstützendes Radmoment bereitzustellen, das durch den Elektromotor (12) bereitgestellt wird, welches das gleiche ist für alle Übersetzungsverhältnisse.

10. Ein Elektrofahrzeug umfassend eine Elektrofahrzeug-Leistungseinheit, wie die in Anspruch 9 gezeigte, darüber hinaus umfassend:

das Getriebe (14) mit einem variablen Übersetzungsverhältnis, auf welches eine Antriebskraft des Elektromotors (12) übertragen wird;
das Rad (5), auf welches die Antriebskraft des Elektromotors (12) über das Getriebe (14) übertragen wird.

**Revendications**

1. Procédé de commande d'un véhicule à assistance électrique dans lequel la sortie d'un moteur électrique (12) est transmise à une roue (5) au travers d'une transmission présentant un rapport de démultiplication variable (14), **caractérisé en ce que** le procédé comprend :

l'acquisition du régime de rotation moteur M du moteur électrique (12),
la détermination d'une puissance motrice cible W qu'il est souhaité délivrer en sortie du moteur électrique (12) en fonction de la vitesse de roue ou de la vitesse de véhicule V du véhicule électrique indépendamment du rapport de démultiplication de transmission de la transmission (14), et
l'entraînement du moteur électrique (12) à un couple moteur cible t qui est obtenu en divisant la puissance motrice cible W par le régime de rotation moteur M afin de procurer un couple assisté à la roue procuré par le moteur électrique (12) qui est identique pour tous les rapports de démultiplication.

2. Procédé de commande d'un moteur de véhicule électrique conforme à la revendication 1, dans lequel la puissance motrice cible W est diminuée progressivement à proximité de la vitesse cible V2 de sorte à ce que la puissance motrice cible W devienne nulle quand la vitesse de roue ou la vitesse de véhicule V vaut la vitesse cible V2.

3. Procédé de commande d'un moteur de véhicule électrique conforme à la revendication 1, dans lequel la puissance motrice cible W est déterminée en prenant en considération un angle d'inclinaison de la surface de la route.

4. Procédé de commande d'un moteur de véhicule électrique conforme à la revendication 1, dans lequel la puissance motrice cible W est déterminée en prenant en considération une entrée qui peut être mise en oeuvre par un utilisateur.

5. Procédé de commande d'un moteur de véhicule électrique conforme à l'une quelconque des revendications 1 à 4, dans lequel, lorsque le régime de rotation moteur M est inférieur à une valeur limite inférieure prédéterminée ML, le couple moteur cible t est réglé à une valeur prédéterminée t1 indépendamment du régime de rotation moteur M.

6. Procédé de commande d'un moteur de véhicule électrique conforme à l'une quelconque des revendications 1 à 5, dans lequel, lorsque le régime de rotation moteur M est supérieur ou égal à une valeur limite supérieure prédéterminée MH, le couple moteur cible t est réglé pour être nul indépendamment du régime de rotation moteur M.

7. Procédé de commande d'un moteur de véhicule électrique conforme à l'une quelconque des revendications 1 à 6, dans lequel l'accélération en rotation A du moteur électrique est calculée à partir du régime de rotation moteur M, et dans lequel la puissance motrice cible W est réglée pour être nulle lorsque l'accélération en rotation A est supérieure ou égale à la valeur limite supérieure AH.

8. Procédé de commande d'un moteur de véhicule électrique conforme à l'une quelconque des revendications 1 à 7, dans lequel la puissance motrice cible W est déterminée en réponse à l'entrée délivrée par le moyen d'entrée prévu dans le véhicule.

**9.** Unité de puissance (10) de véhicule électrique dans laquelle la sortie d'un moteur électrique (12) est transmise à une roue (5) au travers d'une transmission présentant un rapport de démultiplication variable (14), l'unité de puissance (10) de véhicule électrique comprenant :

le moteur électrique (12),
une unité d'acquisition de régime de rotation (41) qui acquiert le régime de rotation moteur M du moteur électrique (12),
une unité de détermination de puissance motrice cible (31) qui détermine la puissance motrice cible W du moteur électrique (12) qu'il est souhaité délivrer en sortie du moteur électrique (12) en fonction de la vitesse de roue ou de la vitesse de véhicule V du véhicule électrique indépendamment du rapport de démultiplication de transmission de la transmission (14),
une unité de calcul couple moteur cible (32) qui calcule un couple moteur cible t qui est obtenu en divisant la puissance motrice cible W par le régime de rotation moteur M, et
une unité de commande de moteur (33) qui entraîne le moteur électrique (12) jusqu'au couple moteur cible t afin de procurer un couple assisté de roue procuré par le moteur électrique (12), lequel est identique pour tous les rapports de démultiplication.

**10.** Véhicule électrique comprenant une unité de puissance de véhicule électrique telle que celle décrite dans la revendication 9, comprenant en outre :

la transmission présentant un rapport de démultiplication variable (14) à laquelle est transmise la force d'entraînement du moteur électrique (12),
la roue (5) à laquelle est transmise la force d'entraînement du moteur électrique (12) au travers de la transmission (14).

## FIG. 1

EP 2 705 973 B1

# FIG. 2

EP 2 705 973 B1

# FIG. 3

START

S01 IS ASSISTED RUNNING MODE ON?  NO

YES

S02 ACQUIRE MOTOR ROTATION SPEED M

S03 M＜ML?  YES → S04 TARGET MOTOR TORQUE t = t1

NO

S05 M＜MH?  NO → S06 TARGET MOTOR TORQUE t = ZERO

YES

S07 DETERMINE TARGET MOTOR POWER W

S08 CALCULATE TARGET MOTOR TORQUE t

S09 DRIVE MOTOR AT TARGET MOTOR TORQUE t

# FIG. 4

EP 2 705 973 B1

FIG. 5

FIG. 6

## FIG. 7

LOW GEAR    — — MIDDLE GEAR    ·· HIGH GEAR

WHEEL TORQUE T [N·m]

WHEEL SPEED V [rpm]

0    V1    V2

EP 2 705 973 B1

FIG. 8

—— P1    - - P2    - - P3

TARGET MOTOR POWER W [W]

WHEEL SPEED V [rpm]

# FIG. 9

START

S01 IS PUSH-WALKING ASSIST MODE ON?

NO

YES

S02 ACQUIRE MOTOR ROTATION SPEED M

S03 M < ML?

YES → S04 TARGET MOTOR TORQUE t = t1

NO

S05 M < MH?

NO → S06 TARGET MOTOR TORQUE t = ZERO

YES

S07 DETERMINE TARGET MOTOR POWER W

S08 CALCULATE TARGET MOTOR TORQUE t

S09 DRIVE MOTOR AT TARGET MOTOR TORQUE t

**EP 2 705 973 B1**

**REFERENCES CITED IN THE DESCRIPTION**

**Patent documents cited in the description**

- JP 11059557 A
- US 2010131164 A1